(19) Europäisches Patentamt
European Patent Office
Office européen des brevets

(11) **EP 2 543 985 B1**

(12) **EUROPEAN PATENT SPECIFICATION**

(45) Date of publication and mention
of the grant of the patent:
**16.09.2015   Bulletin 2015/38**

(51) Int Cl.:
***G01N 3/20*** *(2006.01)*    ***G01N 11/00*** *(2006.01)*

(21) Application number: **11425153.1**

(22) Date of filing: **07.07.2011**

(54) **Numerical-experimental metodology to study the viscous behaviour of materials**

Numerisch-experimentelle Methode zur Untersuchung des viskosen Verhaltens von Materialien

Méthodologie numérique expérimentale pour étudier les comportements visqueux de matériaux

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.01.2013   Bulletin 2013/02**

(73) Proprietor: **CONSORZIO CETMA
72100 Brindisi (IT)**

(72) Inventors:
 • **Bardaro, Danilo
   72023 Mesagne (BR) (IT)**
 • **Bene, Pasquale
   73030 Vitigliano (LE) (IT)**

(74) Representative: **Bruni, Giovanni
   Laforgia, Bruni & Partners
   Corso Duca degli Abruzzi, 78
   10129 Torino (IT)**

(56) References cited:
   **FR-A1- 2 639 117      JP-A- 57 175 939
   JP-A- 2005 337 834**

 • **SANG-HO LEE ET AL: "Bending Creep Test to
   Measure the Viscosity of Porous Materials during
   Sintering", JOURNAL OF THE AMERICAN
   CERAMIC SOCIETY, vol. 86, no. 6, 29 April 2002
   (2002-04-29) , pages 877-82, XP55009748,**
 • **BLAINE ET AL: "Critical use of video-imaging to
   rationalize computer sintering simulation
   models", COMPUTERS IN INDUSTRY, ELSEVIER
   SCIENCE PUBLISHERS. AMSTERDAM, NL, vol.
   56, no. 8-9, 1 December 2005 (2005-12-01), pages
   867-875, XP005157350, ISSN: 0166-3615, DOI:
   10.1016/J.COMPIND.2005.05.013**
 • **GREEN ET AL: "Constrained sintering: A delicate
   balance of scales", JOURNAL OF THE
   EUROPEAN CERAMIC SOCIETY, ELSEVIER
   SCIENCE PUBLISHERS, BARKING, ESSEX, GB,
   vol. 28, no. 7, 22 January 2008 (2008-01-22), pages
   1451-1466, XP022534050, ISSN: 0955-2219, DOI:
   10.1016/J.JEURCERAMSOC.2007.12.012**

## Description

The present invention relates to a numerical-experimental methodology to study the viscous behavior of solid materials and to estimate the real viscosity evolution.

## STATE OF THE ART

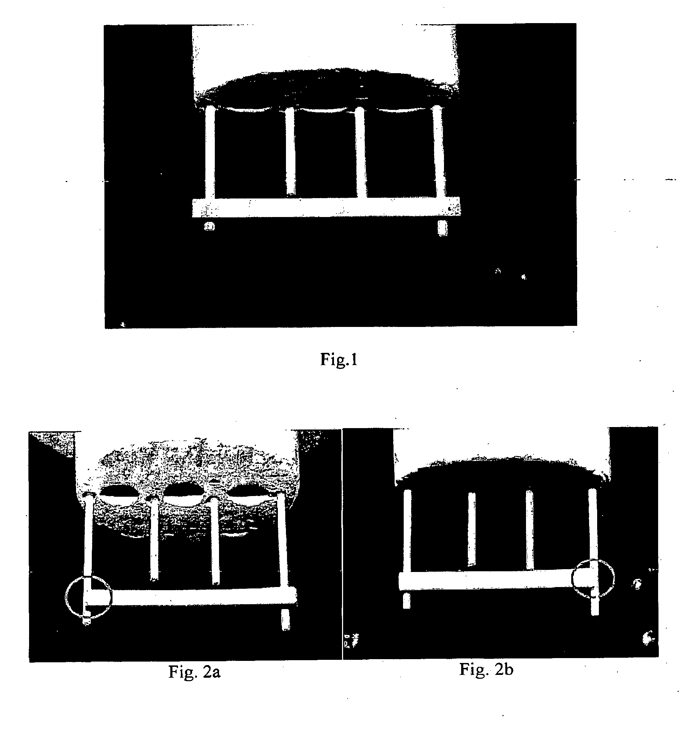

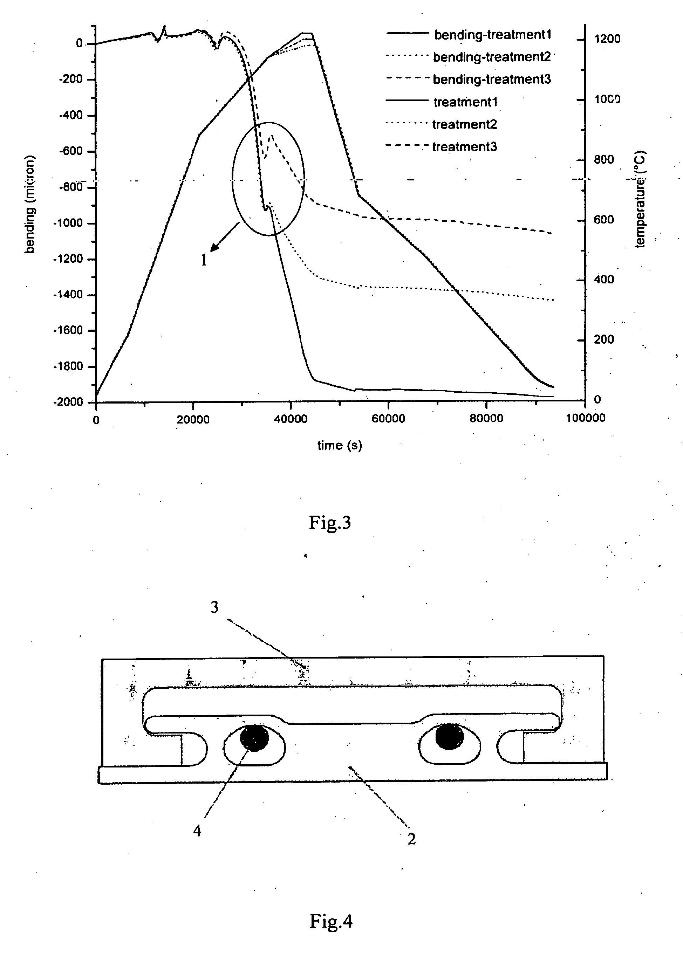

The current state of the art regarding the study of solid materials viscous behavior as function of temperature is carried out by using optical instruments able to perform measurements without contact with the sample to be analyzed. D.C. Blaine et al. disclose in their article "Critical use of video-imaging to rationalize computer sintering simulation models", Comp. in Ind., 56(8-9): 867-875, 2005 a study of the viscous behavior of solid materials which corresponds to the preamble of claim 1. A further prior art disclosure is the scientific article of Lee et al. "Bending Creep Test to Measure the Viscosity of Porous Materials during Sintering", J. Am. Cer. Society, 86: 877-882, 2003. Despite the use of the optical technology, the test specimen, because of its viscous behavior, interferes with the measuring device. The experimental test results are inevitably compromised and, as a consequence, unreliable and unrepeatable data are obtained. As it is shown in fig. 1, the two points bending configuration is the conventional currently test used. It is characterized by a simply supported beam loaded by its own weight. Therefore, the conventional optical instrument, among its various components, is provided with two supporting rods on which the specimen is placed. The most recurring problem is that at high temperatures the ceramic specimens adhere to the supporting rods. Since such phenomenon does not occur equally at both ends, the specimen midpoint, because of the material shrinkage, translates horizontally invalidating the experimental test results (figs. 2a and 2b). As it is shown in fig. 3, the characteristic effect of the above described translation is also graphically visible on the experimental bending curve. The characteristic "peak" caused by the adhesion phenomena is indicated with 1

The present invention, instead, relates to the development of a numerical-experimental methodology to study the material viscous behavior and to estimate the real viscosity evolution. The following detailed description of the invention refers to an absolutely not limiting example concerning a numerical-experimental procedure and all the devices to measure the viscosity to be applied to all materials that exhibit shrinkage and viscous deformation at the same time.

## BRIEF DESCRIPTION OF THE DRAWINGS

- Fig. 1 shows the test configuration used in the conventional experimental tests;

- Figs. 2a and 2b show two specimens at the end of the conventional experimental test. The asymmetric translation phenomena, caused by the specimen adhesion to the supporting rods, is highlighted;
- Fig. 3 shows some experimental bending curves obtained performing the conventional test;
- Fig. 4 shows a CAD assembly of the innovative bending test configuration;
- Fig. 5 shows the geometric projections and axonometric view of the supporting structure of the new bending test configuration;
- Fig. 6 shows the geometric projections and axonometric view of the material specimen of the new bending test configuration;
- Fig. 7 is an example of experimental analysis results obtained by using the new bending test configuration based on the specimen geometry and supporting structure;
- Fig. 8 shows a schematic representation of the conventional bending test known in literature;
- Fig. 9 shows a comparison between the material sintering rate, measured during a dilatometric test, and the material bending rate measured by means of the new bending test configuration;
- Fig. 10 shows an example of material viscosity curves plotted by varying the parameter h (fig. 8);
- Fig. 11 shows the numerical model and the boundary conditions of the new bending test configuration;
- Fig. 12 shows the results of the new bending test numerical simulation and in particularly the deformed and undeformed configuration of the material specimen;
- Fig. 13 shows the comparison between the experimental test results and the numerical simulation ones of the **new** bending test (fig. 4) for different values of the parameter h (fig. 8);
- Fig. 14 shows a comparison between the experimental curve and the numerical one (FEM analysis) corresponding to the h target value: h=h*=h3;
- Fig. 15 shows the real evolution of material viscosity, found by means of the developed numerical-experimental methodology;
- Fig. 16 shows the supporting structure and the deformed material specimen at the end of the developed bending test;
- Fig. 17 shows a flow chart summarizing the developed numerical-experimental methodology to determine the real material viscosity.

## DETAILED DESCRIPTION OF THE INVENTION

The numerical-experimental methodology has been developed to study the viscous behavior of ceramic materials during firing; however, this methodology is applicable as well to study all the materials, that during a process, exhibit shrinkage and viscous deformation at the same time, as for example polymeric materials, composite materials and others.

Due to the described drawbacks, relating to the adhesion phenomena, the viscosity determined by the conventional experimental test does not correspond to the real material property.

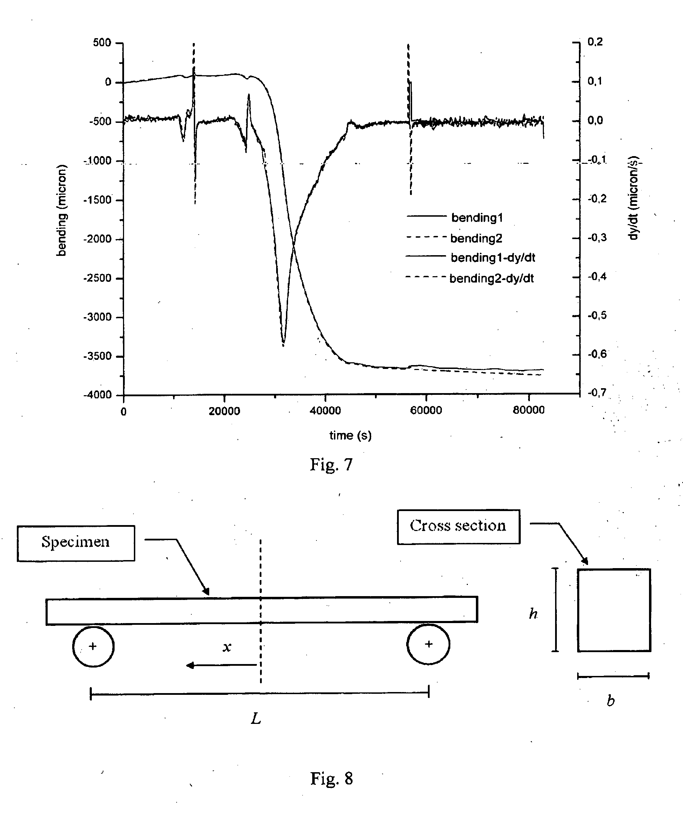

The present invention aims at overcoming the drawbacks of the conventional experimental test configuration (fig. 8) and at determining the real material viscosity by means of the numerical-experimental methodology, which consists of:

> ✔ an **innovative bending** experimental test configuration able to solve the problems concerning the conventional bending test;
> ✔ a numeric simulation of the developed experimental test to determine the material viscosity as function of temperature. In particular, the numerical analyses allowed to identify an equivalent equation to calculate the material viscosity by using the test results of the **new bending** test configuration.

In fig. 3 the undesired effect of the specimens translation is shown. This effect arises from the bending curve obtained experimentally during the conventional test. As mentioned above, the undesirable adhesion between the supporting rods (4) and the specimen causes a horizontal translation of the specimen midpoint, which invalidates the experimental test (figs. 2a and 2b). The graphically highlighted "peak" (1) is the experimental evidence of what described.

In order to solve the above characterization problems, encountered in the conventional bending test, a new test configuration has been developed. Fig. 4 shows the new test configuration developed for the study of the viscous behavior of ceramic materials during firing. The configuration includes the use of a supporting structure (2) on which the **C-shaped** specimen (3), **as can be seen in fig. 4,** to be analyzed is placed; the resulting assembly is then installed on the supporting rods (4) of the measuring instrument.

The innovative test configuration, object of the present invention, is shown in fig 4; the supporting rods (4) of the optical instruments are not in direct contact with the specimen (3) to be analyzed, but with a supporting structure (2) provided with two holes (5). Moreover, the supporting structure (2) and the specimen (3) were both designed to prevent the undesired effect of the specimen midpoint translation caused by the combined effect of the material shrinkage and the viscous deformation that invalidates the experimental test.

In fact, in the test configuration the sensor of the optical instrument focuses on the specimen midpoint and during the test it follows its movement measuring the bending as function of time. With the innovative test configuration (fig. 4), the specimen (3), because of the thermal shrinkage, is brought in contact with the fins (9) of the supporting structure (2). This ensures an accurate analysis of the material deformation process and the reliability of experimental test results.

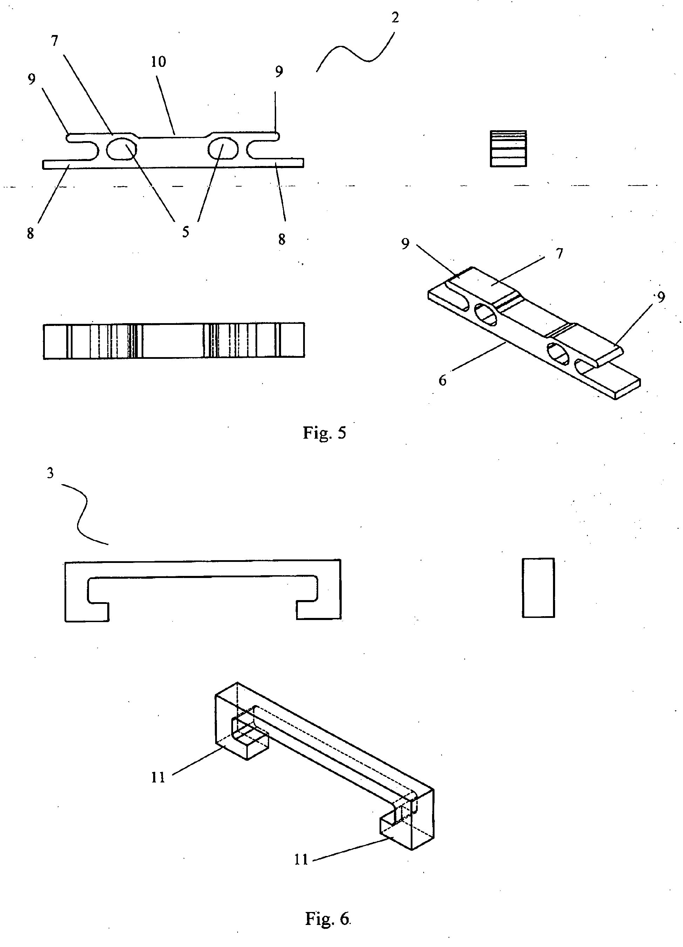

Figures 5 and 6 respectively show the drawings of the supporting structure (2) and of the specimen (3). The orthogonal projection and the isometric view were reported. The supporting structure (2) consists of a central body, having structural functions, on which were obtained two holes (5). The holes were shaped to allow the installation on the supporting rods (4). At each end it has four fins: the two longest (8) start from the lower base (6) of the structure and allow the placement of the test specimen; the remaining two (9) start from the top of the structure (7) and during the test are always in contact with the material specimen (3) to prevent any horizontal movement. The fins edges are rounded to prevent specimen damage during the deformation process. Finally, at the top of the structure a groove (10) was made to increase the maximum displacement of the material specimen (3) to be measured.

By means of the test configuration described is possible to carry out a bending test by using a dedicated optical instrument that focuses on the specimen midpoint and during the test follows the movement by measuring the bending as function of time. Therefore, some tests were carried out on specimens having the same geometric properties in order to ensure the repeatability of results. In fig. 7 the results of two experimental tests were reported with the aim of highlighting the repeatability of results and the absence of undesirable events that occur in the conventional test (Fig. 3). It follows that the innovative test configuration developed, object of the present invention, has solved the adhesion problem and at the same time has allowed to obtain reliable and repeatable results.

Another element of the *ad hoc* methodology developed consists of the experimental test numerical simulation to determine the material viscosity as function of temperature. It is known from the literature that, starting from the bending theory of a linear elastic beam subjected to a uniformly distributed load, it is possible to determine the material viscous properties.

As shown in Fig. 8, for a linear elastic solid, the displacement in the midpoint (x = 0), $\delta_{x=0}$, is equal to:

$$\delta_{x=0} = \frac{5\rho g L^4}{32 E h^2} \qquad (I)$$

where g is the gravity acceleration, p the densification curve, L the span, E the elastic modulus and h the section height.

Considering the analogy between a linear elastic and linear viscous solid, the elastic modulus E and the bending $\delta_{x-0}$, in (I), can be respectively replaced by the uniaxial viscosity $\eta$ and the bending rate of the beam midpoint $\delta_{x=0}$ (S. H. Lee, G. L. Messing, D. J. Green J. Am. Ceram. Soc. 2003); the (I) becomes:

$$\eta = \frac{5\rho g L^4}{32\dot{\delta}_{x=0} h^2} \quad \text{(II)}$$

Finally, a formula has been identified to determine the viscosity of a solid starting from the bending rate $\dot{\delta}_{x=0}$ by using the conventional bending test. As already stated, analyzing the tests results carried out on ceramic specimens (and however for all the materials that shrink and have a viscous behavior at the same time) the bending curves were not reliable and may not reflect the real behavior of the material due to the undesirable adhesion between the instrument supporting rods (4) and the material specimen. This involves that these experimental tests can't be used to determine the bending rate $\dot{\delta}_{x=0}$, and, as a consequence, are not suitable to calculate the ceramic material viscosity during firing.

As described above, this problem has been solved by means of the development of an *ad hoc* experimental methodology able to provide reliable and repeatable results of the material viscous behavior.

Starting from the experimental test results, carried out on the **C shaped specimen** geometry, a study on how to use these data to determine the material viscosity was done. The aim was to derive a formula, in which these experimental data could be used, starting from the relation (II) applicable in a conventional two points bending test. Assuming the ceramic materials as a case study, absolutely not limiting, the viscous flow involves both the material shrinkage (sintering) and the viscous deformation.

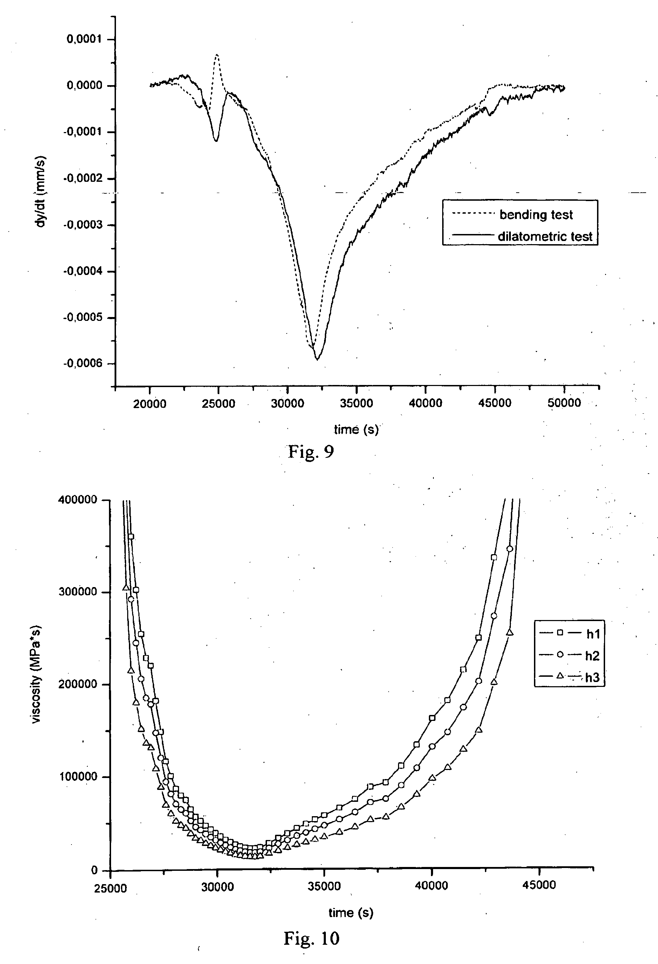

Fig. 9 shows the similarity between the dilatometric (sintering) and bending rate curves: the two curves have the same characteristic times (and as consequence characteristic temperatures) that determine the material behavior (starting point, maximum peak and end value measured on the abscisses axis). The sintering rate is a material property: its shape and the characteristic times/temperatures are data typical of the material under investigation. On the contrary **the shape of the bending rate curve depends on the intrinsic material properties and in particular on the viscosity; whereas,** the numeric values measured on the vertical axis depends on the particular specimen geometry and then on the test configuration. Finally, the similarity between the sintering rate and the bending rate is due to the fact that the physical phenomenon that governs the sintering process and viscous flow process is the same.

Afterwards, the viscous flow is responsible for the viscous deformation processes of the ceramic materials and is also the predominant densification mechanism during firing; it follows that the material viscosity governs both the viscous flow process in the bending test and the sintering process in the dilatometric tests.

On the basis of these considerations can be argued that the bending rate curve , $\dot{\delta}_x$=0 (corrected by the measurement errors described above), of the two points bending test configuration, will have a shape similar to the one of the sintering rate. Finally, the curve's shape will be the same as the one obtainable during the bending test on the **C shaped specimen** geometry as all phenomena are dependent on viscous properties of the material.

Consequently, in the relation (II) it is possible to use the bending rate, measured during the **new** bending test, indicated as $\dot{\delta}_{x=0}$, to calculate the material viscosity (valid in the two points bending test configuration).This can be done if it is possible to define the geometric characteristic (L* and h*) of a beam that in the conventional two points bending test deforms in the same manner of the **C shaped specimen** geometry in the developed bending test configuration, $\dot{\delta}_{x=0}$.

In such a way, the (II) can be rewritten equivalently as follows:

$$\eta = \frac{5\rho g L^{*4}}{32\dot{\delta}_{x=0}^* h^{*2}}$$

$$\text{(III)}$$

For simplicity, once fixed L* equal to L (the span of the supporting rods 4), the geometric characteristic to be determined, to assure the equivalence, is h*. The equivalence between the relations (II) and (III) is due to the fact that the viscosity is a material property.

To identify the value h*, which corresponds to the correct curve of material viscosity, were used FEM codes able to reproduce numerically the bending experimental test of the **C shaped specimen** geometry. To that end, a sensitivity analysis, considering different values of h, is needed to identify the value h* for which there is a good agreement between the numerical and the experimental curves of the bending test on the **C shaped specimen** geometry.

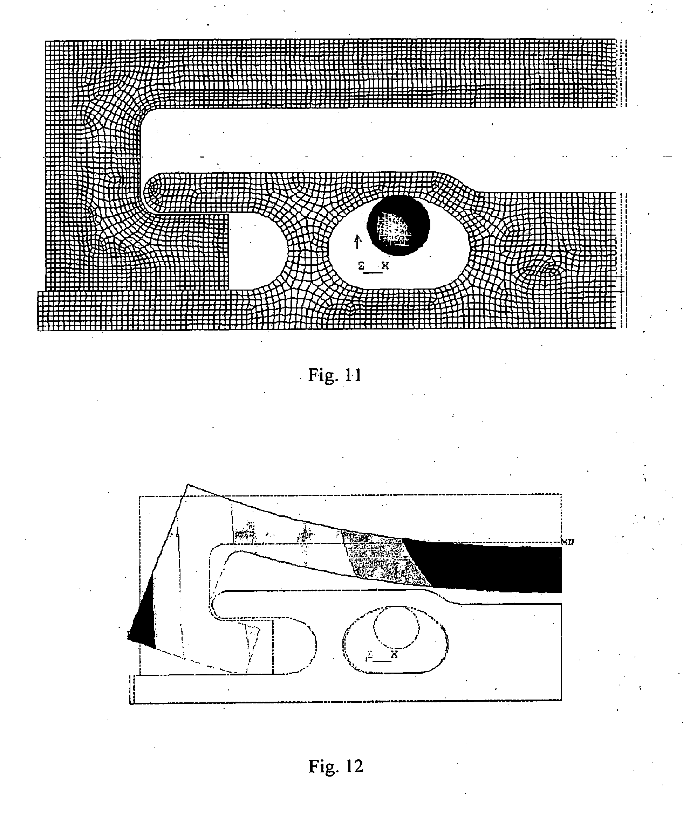

As described by (III), once defined $\dot{\delta}_{x=0}$ and L *, the viscosity $\eta$ varies theoretically according to the value of h. Fig. 10 shows how the material viscosity varies with h; the viscosity curves, calculated by means of the equation (III), were used to perform the numerical simulations in order to determine the real material viscosity. Fig. 11 shows the numerical model used in FEM analysis and fig. 12 illustrates the simulation results in terms of displacements along the y direction , along which the load acts.

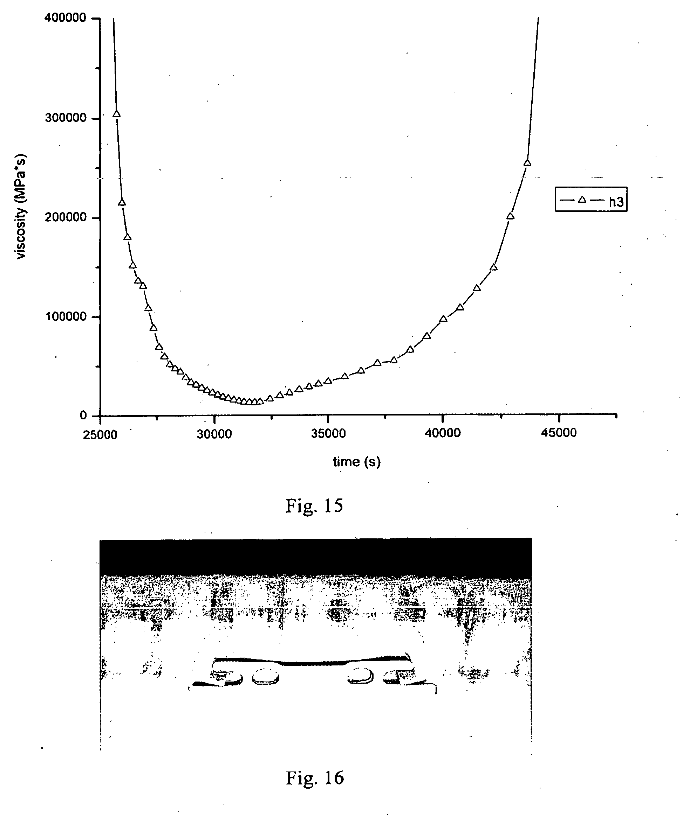

The numerical analysis results (deformed configuration) are in good agreement with those obtained by the experimental tests (Fig. 16).

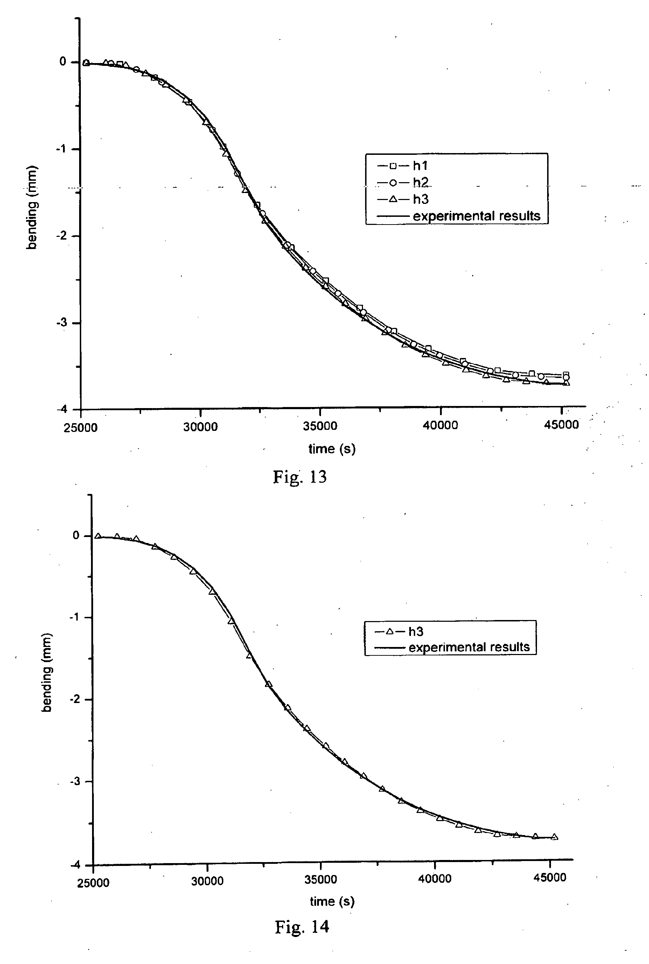

As already stated, the viscosity curve varies with h (Fig. 10) and, as a consequence, the flexural deformation, resulting from FEM analysis, is a function of h (Fig. 13). Therefore, analyzing the differences between the experimental test results and those obtained by FEM analysis for different values of h (shown in Fig. 13), it is possible to calibrate the value of h in order to accurately determine the viscosity of the ceramic material during firing. For the material, proposed in this description, absolutely not limiting, it follows that the bending curve that best approximates the behavior of the ceramic material during firing is the one corresponding to a value of h equal to h3 (Fig. 14). Finally it was possible to accurately determine the viscosity of the ceramic material during firing, as shown in Fig. 15. Fig. 16, however, shows the specimen deformed by the experimental procedure, object of the present invention.

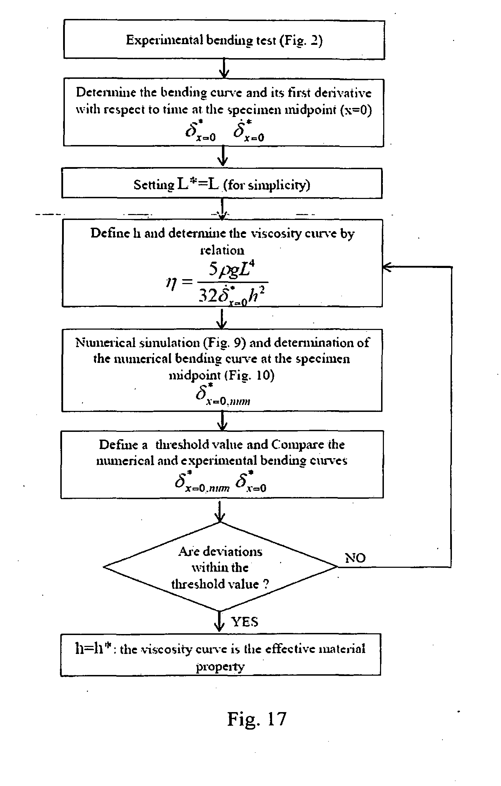

Fig. 17 represents a flow chart in which all the steps concerning both the developed methodology and the numerical-experimental calibration procedure are summarized. With reference to this scheme the main steps of the numerical-experimental method to study the viscous behavior of materials and to accurately determine the viscosity of a material can be summarized as follows: first a significant numbers of material specimens have to be produced. All the specimens (3) must have the same geometry and dimensions of the **new** experimental test developed (Fig. 4); then, starting from the experimental tests results the bending and bending rate curves, respectively $\delta^{*}_{x=0}$ and $\dot{\delta}^{*}_{x=0}$, are obtained. These steps are repeated for the previous defined number of specimen in order to assess repeatability of test results.

The experimental bending curve, $\delta^{*}_{x=0}$, is used both for the numerical and experimental results comparison and for the parameter h calibration. The bending rate curve, $\dot{\delta}^{*}_{x=0}$, is needed to determine the material viscosity as follows: once fixed L*=L for simplicity (that is the distance between the supporting rods of the measuring instrument) and defined a preliminary value of h, then the viscosity curve is calculated by means of the relation (III).

A numerical simulation of the bending experimental test of the **C shape** geometry is carried out. The numerical bending curve in the specimen midpoint, $\delta^{*}_{x=0,num}$, is then calculated and compared with the experimental bending curve, $\delta^{*}_{x=0}$. An acceptable deviation threshold between the two curves is needed to be fixed.

The next step is to check the deviations between numerical and experimental curve. If deviations are equal or less than the threshold value, the value of h defined is the target value h*, for which the relations (II) and (III), are equivalent. Consequently, the viscosity curve obtained is the real material properties. Conversely, if the deviations are greater than the threshold value, the procedure is iteratively repeated (steps 4, 5, 6, 7) until the desired agreement between numerical and experimental results is reached.

## Claims

1. Numerical-experimental methodology to study the viscous behavior of ceramic materials and to determine the material viscosity as a function of temperature, comprising the steps of:

   (i) producing a significant number of material specimens (3) to be used for a bending experimental tests with an optical instrument;
   (ii) carrying out the bending experimental test in which the material specimen (3), loaded at least by its own weight, undergoes thermal and viscous deformations and measuring the vertical displacement in the specimen midpoint as a function of temperature;
   (iii) deriving, starting from said experimental test, a bending curve and a bending rate curve in the specimen midpoint;
   (iv) repeating the bending experimental test for a significant number of specimens in order to verify the results repeatability;
   (v) defining an equation to calculate the material viscosity by using the bending rate curve, $\dot{\delta}_{x=0}$:

   $$\eta = \frac{5\rho g L^{*4}}{32\dot{\delta}^{*}_{x=0} h^{*2}}$$

   where g is the gravity acceleration, p the material densification curve, L* and h* are, respectively, the span and the section height of an equivalent beam that, in the two points bending configuration test, deforms with the same bending rate, $\dot{\delta}_{x=0}$, of the C shaped specimen (3),
   (vi) performing FEM numerical analyses of the bending experimental test, which are complementary to the experimental test results, to identify said parameter L* and h* and to determine the correct material viscosity as a function of the temperature,

   and wherein said methodology is **characterized by** the fact that;

   a. said bending experimental test is performed by using a C shaped test specimen (3) that is assembled on a dedicated supporting structure (2), in order to avoid adhesion problems of the conventional bending test, and by installing the assembly of said test specimen (3) and said supporting structure (2), on the measuring instrument, wherein said test specimen (3) is not in contact with the supporting rods (4) of the measuring instrument during the whole test,

b. said supporting structure (2) comprises a pair of boles (5), **shaped to allow the installation on supporting rods (4)** of the measuring instrument, a pair of fins (8) that allow the placement of the test specimen (3) and a pair of fins (9) with rounded edges that during the bending test are always in contact with the test specimen (3) **adapted** to prevent any horizontal movement **of the specimen (3).**

2. Device to carry out the numerical-experimental methodology, according to claim 1, comprising a supporting structure (2) on which a C-shaped specimen (3) to be analyzed is placed, **characterised in that** said supporting structure (2) is provided with at least a pair of fins (8) starting from the lower base (6) on which the Specimen (3) can be placed, a pair of fins (9) starting from the top of the structure (7) **adapted to be always in contact with the inside of the c-shaped specimen (3) to prevent horizontal movement of the specimen (3) during a bending test** and at least a pair of holes (5) **shaped to allow the installation on supporting rods (4).**

**Patentansprüche**

1. Numerisch-experimentelle Methodik zum Studium des viskosen Verhaltens von Keramikmaterialien und zur Bestimmung der Materialviskosität als eine Funktion der Temperatur. Die Methodik umfasst folgende Schritte:

(i) Herstellung einer erheblichen Menge von Materialproben (3) zur Verwendung in experimentellen Biegeversuchen mit einem optischen Instrument;

(ii) Durchführung des experimentellen Biegeversuchs, bei dem die Materialprobe (3) unter Belastung von mindestens ihrem Eigengewicht thermische und viskose Verformungen durchläuft, wobei die vertikale Verschiebung im Mittelpunkt der Probe als Funktion der Temperatur gemessen wird;

(iii) Ableitung (wobei besagter Biegeversuch als Ausgangspunkt gilt) einer Biegekurve und einer Biegeratenkurve im Mittelpunkt der Probe;

(iv) Wiederholung des experimentellen Biegeversuchs mit einer ausreichenden Anzahl von Materialproben zur Bestätigung der Reproduzierbarkeit der Ergebnisse;

(v) Definition einer Gleichung zur Berechnung der Materialviskosität anhand der Biegeraten-

kurve, $\dot{\delta}^*_{x=0}$ :

$$\eta = \frac{5 \rho g L^{*4}}{32 \dot{\delta}^*_{x=0} h^{*2}}$$

wobei g die Erdbeschleunigung und p die Materialverdichtungskurve ist, L* und h* sind jeweils der Spann und die Querschnittshöhe eines äquivalenten Strahls, der sich im Zweipunkte-Biegekonfigurationstest mit derselben Biegerate, $\dot{\delta}^*_{x=0}$, der C-förmigen Probe (3) verformt,

(vi) Durchführung von numerischen FEM-Analysen des experimentellen Biegeversuchs, die die Ergebnisse des experimentellen Versuchs ergänzen, um besagte Parameter L* und h* sowie die korrekte Materialviskosität als Funktion der Temperatur zu bestimmen,

wobei sich besagte Methodik durch Folgendes kennzeichnet:

a. Der besagte experimentelle Biegeversuch wird mit einer C-förmigen Testprobe (3) durchgeführt, die auf einem hierfür vorgesehenen Träger (2) montiert ist, um Haftungsprobleme beim konventionellen Biegeversuch auszuschließen. Diese aus der Testprobe (3) und dem Träger (2) bestehende Konstruktion wird auf dem Messinstrument angebracht, wobei die Testprobe (3) die Haltestangen (4) des Messinstruments während des gesamten Tests nicht berührt.

b. Der Träger (2) ist mit zwei Löchern (5) zur Befestigung auf den Haltestangen (4) des Messinstruments, zwei Laschen (8) zur Platzierung der Testprobe (3) und zwei weiteren abgerundeten Laschen (9) versehen, die während des Biegeversuchs ständig die Testprobe (3) berühren und eine horizontale Verschiebung der Testprobe (3) verhindern sollen.

2. Gerät zur Durchführung der numerisch-experimentellen Methodik gemäß Aussage 1, bestehend aus einem Träger (2), auf dem die zu analysierende C-förmige Testprobe (3) platziert wird, wobei besagter Träger (2) mindestens zwei Laschen (8) an der Unterseite (6), auf denen die Testprobe (3) platziert werden kann, sowie zwei Laschen (9) an der Oberseite (7), die ständig die Innenseite der C-förmigen Testprobe (3) berühren, um eine horizontale Verschiebung der Testprobe (3) während des Biegeversuchs zu verhindern, sowie mindestens zwei Löcher (5) aufweist, die das Anbringen auf den Haltestangen (4) ermöglichen.

## Revendications

1. Méthodologie numérique expérimentale visant à étudier le comportement visqueux des matériaux céramiques et à déterminer la viscosité des matériaux en fonction de la température, comprenant les étapes de :

   (i) production d'un nombre important d'éprouvettes de matériau (3) destinées à être utilisées dans le cadre d'un essai expérimental de flexion avec un instrument optique ;
   (ii) exécution de l'essai expérimental de flexion dans lequel l'éprouvette de matériau (3), chargée au minimum par son propre poids, subit des déformations thermiques et visqueuses, et mesure du déplacement vertical du point milieu de l'éprouvette en fonction de la température ;
   (iii) calcul, à partir dudit essai expérimental, d'une courbe de flexion et d'une courbe de taux de flexion au point milieu de l'éprouvette ;
   (iv) répétition de l'essai expérimental de flexion sur un nombre important d'éprouvettes afin de vérifier la reproductibilité des résultats ;
   (v) définition d'une équation permettant de calculer la viscosité du matériau en utilisant la courbe de taux de flexion, $\dot{\delta}^*_{x=0}$ :

$$\eta = \frac{5 \rho g L^{*4}}{32 \dot{\delta}^*_{x=0} h^{*2}}$$

   où g est l'accélération de la gravité, p est la courbe de densification du matériau, L* et h* sont, respectivement, la portée et la hauteur de section d'une poutre équivalente qui, dans l'essai en configuration de flexion sur deux points, se déforme selon le même taux de flexion, $\dot{\delta}^*_{x=0}$, que l'éprouvette en C (3),
   (vi) exécution d'analyses numériques MÉF de l'essai expérimental de flexion, qui sont complémentaires aux résultats de l'essai expérimental, afin d'identifier lesdits paramètres L* et h* et de déterminer la viscosité correcte du matériau en fonction de la température,

   et dans laquelle ladite méthodologie est **caractérisée par le fait que** :

   a. ledit essai expérimental de flexion est exécuté en utilisant une éprouvette en C (3) qui est montée sur une structure porteuse dédiée (2), afin d'éviter les problèmes d'adhésion de l'essai de flexion conventionnel, et en installant l'assemblage formé de ladite éprouvette (3) et ladite structure porteuse (2) sur l'instrument de mesure, ladite éprouvette (3) n'étant pas en contact avec les tiges de support (4) de l'instrument de mesure pendant la totalité de l'essai,
   b. ladite structure porteuse (2) comporte une paire d'orifices (5) formés afin de permettre l'installation sur les tiges de support (4) de l'instrument de mesure, une paire d'ailettes (8) qui permettent le positionnement de l'éprouvette (3) et une paire d'ailettes (9) aux bords arrondis qui, pendant l'essai de flexion, sont toujours en contact avec l'éprouvette (3), adaptées afin d'empêcher tout déplacement horizontal de l'éprouvette (3).

2. Dispositif pour mettre en oeuvre la méthodologie numérique expérimentale selon la revendication 1, comportant une structure porteuse (2) sur laquelle une éprouvette en C (3) à analyser est positionnée, **caractérisé en ce que** ladite structure porteuse (2) est pourvue d'au moins une paire d'ailettes (8) partant de la base inférieure (6) sur lesquelles l'éprouvette (3) peut être positionnée, une paire d'ailettes (9) partant du sommet de la structure (7), adaptées de manière à être toujours en contact avec la face interne de l'éprouvette en C (3) afin d'éviter tout déplacement horizontal de l'éprouvette (3) pendant un essai de flexion et au moins une paire d'orifices (5) formés de manière à permettre l'installation sur les tiges de support (4).

Fig.1

Fig. 2a

Fig. 2b

Fig.3

Fig.4

Fig. 5

Fig. 6

Fig. 7

Fig. 8

Fig. 9

Fig. 10

Fig. 11

Fig. 12

Fig. 13

Fig. 14

Fig. 15

Fig. 16

Experimental bending test (Fig. 2)

Determine the bending curve and its first derivative with respect to time at the specimen midpoint (x=0)

$$\delta^*_{x=0} \quad \dot{\delta}^*_{x=0}$$

Setting $L^*=L$ (for simplicity)

Define h and determine the viscosity curve by relation

$$\eta = \frac{5\rho g L^4}{32\dot{\delta}^*_{x=0}h^2}$$

Numerical simulation (Fig. 9) and determination of the numerical bending curve at the specimen midpoint (Fig. 10)

$$\delta^*_{x=0,num}$$

Define a threshold value and Compare the numerical and experimental bending curves

$$\delta^*_{x=0,num} \quad \delta^*_{x=0}$$

Are deviations within the threshold value ?

NO

YES

h=h* : the viscosity curve is the effective material property

Fig. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• **D.C. BLAINE et al.** Critical use of video-imaging to rationalize computer sintering simulation models. *Comp. in Ind.,* 2005, vol. 56 (8-9), 867-875

• **LEE et al.** Bending Creep Test to Measure the Viscosity of Porous Materials during Sintering. *J. Am. Cer. Society,* 2003, vol. 86, 877-882

• **S. H. LEE ; G. L. MESSING ; D. J. GREEN.** *J. Am. Ceram. Soc.,* 2003